# EUROPEAN PATENT SPECIFICATION

(11) **EP 2 685 131 B1**
(45) Date of publication and mention of the grant of the patent: **19.08.2015**
(21) Application number: 11860322.4
(22) Date of filing: 08.03.2011
(51) Int. Cl.: F16H 9/18, F16H 55/56

(54) **BELT-TYPE CONTINUOUSLY VARIABLE TRANSMISSION**
STUFENLOSES RIEMENGETRIEBE
TRANSMISSION À VARIATION CONTINUE DU TYPE COURROIE

(43) Date of publication of application: 15.01.2014
(73) Proprietor: Toyota Jidosha Kabushiki Kaisha, Toyota-shi, Aichi 471-8571 (JP)
(72) Inventor: SAITO, Tatsuya, Toyota-shi Aichi 471-8571 (JP); SANO, Toshinari, Toyota-shi Aichi 471-8571 (JP); YAMAMOTO, Masafumi, Toyota-shi Aichi 471-8571 (JP); IJICHI, Akira, Toyota-shi Aichi 471-8571 (JP)
(74) Representative: Intès, Didier Gérard André
(86) International application number: PCT/JP2011/055331
(87) International publication number: WO 2012/120633

(56) References cited:
- EP-A2- 1 420 195
- JP-A- 2004 232 775
- JP-U- H0 394 457
- JP-U- H0 439 358
- US-A1- 2005 079 937

## Description

### TECHNICAL FIELD

The present invention relates to a belt-type continuously variable transmission comprising a pair of pulleys and a belt applied to those pulleys, according to the preamble of claim 1 and as it is disclosed in EP1420195(A).

### BACKGROUND ART

In the prior art, a continuously variable transmission, especially, a belt-type continuously variable transmission in which a belt is applied to pair of pulleys is used to vary speed ratio continuously. The continuously variable transmission thus structured is arranged on a power transmission route from a prime mover to a wheel. Specifically, each of the pulleys comprises a fixed sheave integrated with a rotary shaft, and a movable sheave which is opposed to the fixed sheave and to which a load is applied in the direction along the rotary shaft. Therefore, the belt interposed between those sheaves is clamped according to the load applied to the movable sheave, and a torque is transmitted frictionally from the pulley to the belt and also from the belt to the pulley according to the pressure clamping the belt.

In order to enhance a strength and durability of the belt-type continuously variable transmission, the pulleys and the belt are made of metallic material, and lubricant oil is applied to those pulleys and the belt. This kind of the transmission is called a "wet-type belt continuously variable transmission". However, since the lubricant oil is thus interposed between the pulley and the belt, higher pressure is required to clamp the belt in the wet-type belt continuously variable transmission. Therefore, a large amount of power has to be consumed to drive a hydraulic pump to establish a required load to clamp the belt. As a result, a power loss is increased and fuel economy of the vehicle is thereby degraded.

In order to avoid the above-explained disadvantage, contact faces of the belt and the pulley can be coated with a resin material to increase a frictional coefficient therebetween thereby lightening the load applied to the movable sheave. The transmission thus structured is called a "dry-type belt continuously variable transmission". In the dry-type belt continuously variable transmission, the torque is thus transmitted between the pulley and the belt through the resin materials contacted with each other. Therefore, unlike the aforementioned wet-type belt continuously variable transmission, it is unnecessary to feed the lubricant oil between the pulley and the belt. In addition, the frictional force between the pulley and the belt will not be reduced by the lubricant oil, and a space where the pulleys and the belt are arranged is kept in a dry condition.

Thus, the lubricating oil is not used in the dry-type belt continuously variable transmission. Therefore, the power loss may be increased by friction acting between the rotary shaft integrated with the fixed sheave and the movable sheave fitted onto the rotary shaft or another rotary shaft. In order to avoid such power loss caused by the friction acting between the rotary shaft and the movable sheave, in a transmission disclosed in Japanese Patent Publication No. 3412741, a bush made of resin material is interposed between the rotary shaft and the movable sheave.

In addition, since the belt type continuously variable transmission is adapted to transmit the power utilizing the frictional force acting between the pulley and the belt, heat is produced at contact faces of the pulley and the belt. Therefore, the heat of the pulley is transmitted to the bush and the bush is thereby expanded thermally. In this situation, the temperature of the bush is raised especially at a portion close to the pulley face contacted with the belt. As a result, a clearance between the bush and the pulley or a clearance between the bush and the rotary shaft becomes uneven, and an inclination of the movable sheave may be increased by a reaction of the clamping pressure for clamping the belt.

### DISCLOSURE OF THE INVENTION

The present invention has been conceived noting the technical problems thus far described, and an object of the present invention is to provide a belt-type continuously variable transmission which can prevent a sheave from being inclined in case the pulley is heated.

According to the present invention, a belt-type continuously variable transmission comprises: a fixed sheave integrally formed with a rotary shaft: a movable sheave fitted onto the rotary shaft in a manner to slide in an axial direction of the rotary shaft; and a belt interposed between the movable sheave and the fixed shave to transmit power. In order to achieve the mentioned objective, the belt-type continuously variable transmission is provided with a bush, which is interposed between the rotary shaft and the movable sheave to allow the movable sheave to slide on the rotary shaft, and which is formed to have a smaller coefficient of thermal expansion at an axial end portion thereof in the vicinity of a contact face of the movable sheave to which the belt is contacted, in comparison with that at the other axial end portion.

According to the belt-type continuously variable transmission of present invention, the coefficient of thermal expansion of the bush is varied gradually.

Alternatively, according to the present invention, a plurality of bushes having a different coefficient of thermal expansion can be used.

In addition, according to the present invention, the movable sheave is formed integrally with another rotary shaft that is cylindrical and rotates coaxially with the rotary shaft, and the plurality of bushes are arranged between the rotary shaft and said another rotary shaft while keeping a distance from each other.

Specifically, the bush includes a resin bush made of resin material.

In addition, according to the present invention, the contact face of the movable sheave to which the belt is contacted is made of resin material.

Thus, according to the present invention, the movable sheave is fitted onto the rotary shaft of the fixed sheave, and the bush is interposed between the movable sheave and the rotary shaft. As described, the coefficient of thermal expansion of the bush is smaller at an axial end portion thereof in the vicinity of a contact face of the movable sheave in comparison with that at the other axial end portion. Therefore, an inner diameter of the bush can be kept entirely to a constant diameter even after the thermal expansion, and the movable sheave is thereby prevented from being inclined.

According to the present invention, a single piece of the bush can be used, and in this case, the coefficient of thermal expansion of the bush is varied gradually. Therefore, the inner diameter thereof can be kept homogeneously in its length direction even after the thermal expansion so that the movable sheave can be prevented from being inclined.

Alternatively, the plurality of bushes having different coefficient of thermal expansion may also be used in the present invention. In this case, each of the bushes can be formed easily.

As also described, according to the present invention, the movable sheave is formed integrally with a another rotary shaft that is cylindrical and that rotates coaxially with the rotary shaft, and the plurality of bushes may be arranged between the rotary shaft and said another rotary shaft while keeping a distance from each other. In this case, an area on which each single bush is disposed can be reduced. In addition, the clearance between the bush and the rotary shaft can also be kept constantly so that the movable sheave will not be inclined even after the thermal expansion of the bush.

In addition to the above-explained advantages, since the bush is thus made of resin, a friction between the bush and the rotary shaft or the movable sheave can be reduced.

Further, since the contact face of the movable sheave is made of resin material, a load applied to the movable sheave to clamp the belt can be reduced.

### BRIEF DESCRIPTION OF THE DRAWINGS

Fig. 1 is a view schematically showing an example of the belt-type continuously variable transmission according to the present invention.
Fig. 2 is a close-up showing section II in Fig. 1.
Fig. 3 is a close-up showing another example of the belt-type continuously variable transmission according to the present invention.

### BEST MODE FOR CARRYING OUT THE INVENTION

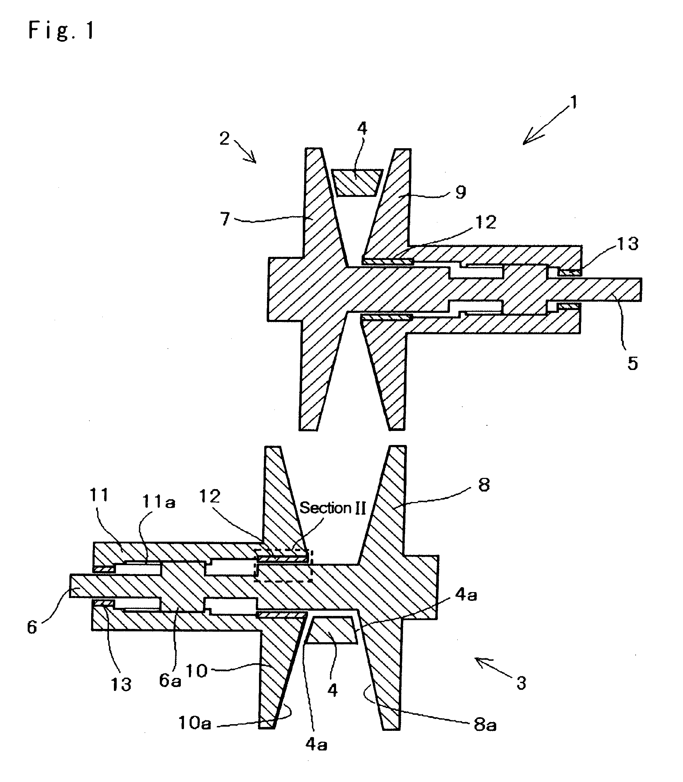

Next, examples of the present invention will be explained hereinafter. Fig. 1 is a sectional view showing a cross-section of the belt-type continuously variable transmission according to the present invention. As shown in Fig. 1, the belt-type continuously variable transmission 1 comprises a primary pulley 2 driven by the power from a not shown engine or motor, a secondary pulley 3 driven by the power from the primary pulley 2, and a belt 4 applied to those pulleys 2 and 3 to transmit the power of the primary pulley 2 to the secondary pulley 3. The primary pulley 2 comprises a fixed sheave 7 formed integrally with a rotary shaft 5, and a movable sheave 9 allowed to reciprocate along a rotational axis. The secondary pulley 3 also comprises a fixed sheave 8 formed integrally with a rotary shaft 6, and a movable sheave 10 allowed to reciprocate along a rotational axis. Thus, the structures of the primary and secondary pulleys 2 and 3 are substantially identical to each other. Therefore, the secondary pulley 3 will be explained hereinafter as an example.

Here will be explained a structure of the fixed sheave 8 and a structure of the movable sheave 10 in more detail. The fixed sheave 8 comprises a conical-shaped pulley face 8a being opposed to the movable sheave 10 to be contacted with a lateral face 4a of the belt 4. A rotary shaft 6 is formed integrally with the fixed sheave 8 in a manner to protrude from both sides of the fixed sheave 8 in the axial direction. Both ends of the rotary shaft 6 thus protruding from the fixed sheave 8 are held in a rotatable manner by not shown bearings arranged in a casing.

Meanwhile, the movable sheave 10 is formed integrally with a cylindrical shaft 11, and a conical pulley face 10a is formed on one of the end portions of the cylindrical shaft 11 to be opposed to the fixed sheave 8. Like the pulley face 8a of the fixed sheave 8, the pulley face 10a is contacted in the same manner with a lateral face 4a of the belt 4 to transmit the power.

In order to rotate the fixed sheave 8 and the movable sheave 10 integrally, ridges 6a protruding outwardly are formed on the rotary shaft 6 of the fixed sheave 8, and grooves 11a are formed on an inner circumferential face of the cylindrical shaft 11 of the movable sheave 10. Those ridges 6a are engaged with the grooves 11a by fitting the cylindrical shaft 11 onto the rotary shaft 6 to spline those shafts 6 and 11. As a result, the fixed sheave 8 and the movable sheave 10 are allowed to be rotated integrally.

In order to reduce a frictional resistance between the rotary shaft 6 of the fixed sheave 8 and the cylindrical shaft 11 of the movable sheave 10, according to the present invention, the belt-type continuously variable transmission 1 is provided with a self-lubricating bush 12. The bush 12 is a cylindrical member made of resin material such as polytetrafluoroethylene (PTFE), and interposed between the rotary shaft 6 and the cylindrical shaft 11. Specifically, the bush 12 is fitted into a hollow internal space of the cylindrical shaft 11 along the inner circumferential face of the cylindrical shaft 11, and the rotary shaft 6 is inserted into the bush 12. For this purpose, the bush 12 is formed to have an inner diameter thereof larger than an outer diameter of the rotary shaft 6 so that a clearance is created between an inner circumferential face of the bush 12 and an outer circumferential face of the rotary shaft 6.

Thus, those pulleys 2 and 3 are structured to frictionally transmit the torque according to the clamping force clamping the belt 4 by the movable sheave 9 (or 10) and the fixed sheave 7 (or 8). Therefore, for example, a contact portion between the pulley face 8a and the lateral face 4a of the belt 4, and a contact portion between the pulley face 10a and the lateral face 4a of the belt 4 are frictionally heated during transmitting the power. Consequently, the movable sheave 10 is heated by the heat resulting from power transmission and a temperature of the bush 12 is thereby raised. In this situation, the temperature of the movable sheave 10 is highest at the contact portion between the pulley face 10a and the belt 4, therefore, the temperature of the bush 12 becomes higher at the end portion of the pulley 10a side than that at the other end portion. Provided that the coefficient of thermal expansion of the bush 12 is entirely constant, in this situation, the inner diameter of the bush 12 becomes smaller at the end portion of the pulley 10a side than that at the other end portion. As a result, the clearance between the inner circumferential face of the bush 12 and the outer circumferential face of the rotary shaft 6 becomes uneven, and the movable sheave 10 may be inclined by a reaction force resulting from clamping the belt 4.

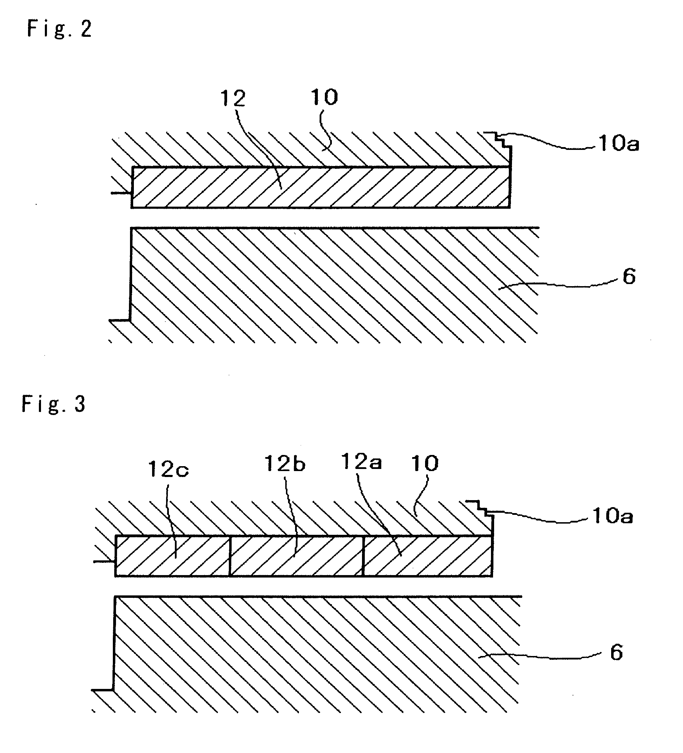

In order to avoid such a disadvantage, according to the belt-type continuously variable transmission of the present invention, the bush 12 is adapted to keep the clearance between the inner circumferential face thereof and the outer circumferential face of the rotary shaft 6 homogeneous even when it is thermally expanded. An example of the bush 12 thus structured is shown in Fig. 2. In the bush 12 shown in Fig. 2, the coefficient of thermal expansion is smallest at the end portion of the pulley 10a side, and increased gradually in the axial direction toward the other end portion. For this purpose, heat quantities to be transmitted to each point on the bush 12 are estimated in advance based on: an anticipated calorific value generated in the pulley face 10a determined by a designed torque capacity; and a heat conductivity of the sheave 10 determined by the material of the sheave 10. Then, target thermal expansion rates at each point on the bush 12 are determined based on the estimated heat quantities to be transmitted to each point on the bush 12, and ratios of ingredients of the bush 12 to achieve the target thermal expansion rates at each point on the bush 12 are determined.

Thus, the coefficient of thermal expansion of the bush 12 is increased gradually in the axial direction from the end portion of the pulley 10a side toward the other end portion. Therefore, when the bush 12 is heated, both of the end portions of the bush 12 are expanded without tapering the inner circumferential face thereof entirely in its length direction. That is, the clearance between the inner circumferential face of the bush 12 and the outer circumferential face of the rotary shaft 6 can be kept homogeneous even after the thermal expansion of the bush 12. For this reason, the movable sheave 10 can be prevented from being inclined even if the bush 12 is thermally expanded so that the power transmission efficiency will not be degraded by such inclination of the movable sheave 10.

Alternatively, in order to reduce the coefficient of thermal expansion of the bush 12 at the end portion of pulley 10a side to which the lateral face 4a of the belt 4 is contacted to be smaller than that at the other end portion, as shown in Fig. 3, the bush 12 may be divided in the axial direction into a plurality of bushes 12a, 12b and 12c having different coefficients of thermal expansion. In this case, the bush 12a having the smallest coefficient of thermal expansion is situated closest to the pulley face 10a. The bush 12b having the coefficient of thermal expansion larger than that of the bush 12a is situated adjacent to the bush 12a on the opposite side of the pulley face 10a, and the bush 12c having the coefficient of thermal expansion larger than that of the bush 12b is situated adjacent to the bush 12b on the opposite side of the bush 12a.

As shown in Fig. 1, according to the belt-type continuously variable transmission 1, another bush 13 may be arranged additionally at the other end portion of the cylindrical shaft 11 opposite to the movable sheave 10. In this case, the coefficient of thermal expansion of the bush 12 arranged on the pulley 10a side is smaller than that of another bush 13. Therefore, the clearance between the inner face of the bush 12 and the outer circumferential face of the rotary shaft 6 is equalized to a clearance between an inner circumferential face of another bush 13 and the outer circumferential face of the rotary shaft 6 even after those bushes 12 and 13 are thermally expanded. For this reason, the movable sheave 10 can be prevented from being inclined so that the power transmission efficiency will not be degraded.

Alternatively, in order to allow the bush 12 to be thermally expanded homogeneously, the bush 12 may be formed to have a conical profile pointing to the pulley face 10a side. In this case, the end portion of the bush 12 of the pulley face 10a side is expanded in a large amount by the heat generated in the pulley face 10a but the other end portion is expanded in a small amount by the heat transmitted thereto. Therefore, the clearance between the inner circumferential face of the bush 12 and the outer circumferential face of the rotary shaft 6 can be kept homogeneous even after the bush 12 is expanded thermally.

In the above-explained example, the bush 12 is arranged inside of the cylindrical shaft 11. However, the bush 12 may also be fitted onto the rotary shaft 6. In this case, the bush having the smaller coefficient of thermal expansion is arranged on the rotary shaft 6 within a sliding range of the pulley 10 of the cylindrical shaft 11, and the bush having the larger coefficient of thermal expansion is arranged on the rotary shaft 6 within a sliding range of end portion of the cylindrical shaft 11 opposite to the pulley 10.

Lastly, the belt-type continuously variable transmission according to the present invention may be applied not only to automobiles but also to aircraft, vessels, industrial machinery etc. In addition, the present invention may be applied to both wet-type continuously variable transmissions using a metal belt and dry-type continuously variable transmissions using a resin belt.

## Claims

1. A belt-type continuously variable transmission (1), comprising
a fixed sheave (8) integrally formed with a rotary shaft (6);
a movable sheave (10) fitted onto the rotary shaft (6) in a manner to slide in an axial direction of the rotary shaft (6); and
a belt (4) interposed between the movable sheave (10) and the fixed sheave (8) to transmit power;
**characterized by**:
a bush (12), which is interposed between the rotary shaft (6) and the movable sheave (10) to allow the movable sheave (10) to slide on the rotary shaft (6), and which is formed to have a smaller coefficient of thermal expansion at an axial end portion thereof in the vicinity of a contact face (10a) of the movable sheave (10) to which the belt (4) is contacted, in comparison with that at the other axial end portion.

2. The belt-type continuously variable transmission as claimed in claim 1, wherein the coefficient of thermal expansion of the bush (12) is varied gradually.

3. The belt-type continuously variable transmission as claimed in claim 1, wherein the bush (12) includes a plurality of bushes (12a; 12b; 12c) individually having a different coefficient of thermal expansion.

4. The belt-type continuously variable transmission as claimed in claim 3, wherein:
the movable sheave (10) comprises a cylindrical another rotary shaft (11) that rotates coaxially with the rotary shaft (6); and
the plurality of bushes (12a; 12b; 12c) are arranged between the rotary shaft (6) and said another rotary (11) shaft while keeping a distance from each other.

5. The belt-type continuously variable transmission as claimed in any of claims 1 to 4, wherein the bush (12) is made of resin material.

6. The belt-type continuously variable transmission as claimed in any of claims 1 to 4, wherein the contact face (10a) of the movable sheave to which the belt is contacted is made of resin material.

## Patentansprüche

1. Stufenloses Getriebe (1) vom Riementyp, umfassend
eine feste Scheibe (8), die mit einer Drehwelle (6) einstückig ausgebildet ist, eine bewegliche Scheibe (10), die an der Drehwelle (6) auf eine Weise angebracht ist, dass sie in einer axialen Richtung der Drehwelle (6) gleitet, und
einen Riemen (4), der zwischen der beweglichen Scheibe (10) und der festen Scheibe (8) angeordnet ist, um Kraft zu übertragen,
**gekennzeichnet durch**:
eine Buchse (12), die zwischen der Drehwelle (6) und der beweglichen Scheibe (10) angeordnet ist, um zu ermöglichen, dass die bewegliche Scheibe (10) auf der Drehwelle (6) gleitet, und die derart ausgebildet ist, dass sie an einem axialen Endabschnitt davon in der Nähe einer Kontaktfläche (10a) der beweglichen Scheibe (10), mit welcher Riemen (4) in Kontakt steht, einen kleineren Wärmeausdehnungskoeffizienten verglichen mit jenem an dem anderen axialen Endabschnitt aufweist.

2. Stufenloses Getriebe vom Riementyp nach Anspruch 1, wobei sich der Wärmeausdehnungskoeffizient der Buchse (12) allmählich ändert.

3. Stufenloses Getriebe vom Riementyp nach Anspruch 1, wobei die Buchse (12) mehrere Buchsen (12a; 12b; 12c) aufweist, die jeweils einen anderen Wärmeausdehnungskoeffizienten aufweisen.

4. Stufenloses Getriebe vom Riementyp nach Anspruch 3, wobei:
die bewegliche Scheibe (10) eine andere, zylindrische Drehwelle (11) umfasst, die sich koaxial mit der Drehwelle (6) dreht, und
die mehreren Buchsen (12a; 12b; 12c) zwischen der Drehwelle (6) und der anderen Drehwelle (11) angeordnet sind, wobei sie voneinander beabstandet sind.

5. Stufenloses Getriebe nach einem beliebigen der Ansprüche 1 bis 4, wobei die Buchse (12) aus Harzwerkstoff hergestellt ist.

6. Stufenloses Getriebe nach einem beliebigen der Ansprüche 1 bis 4, wobei die Kontaktfläche (10a) der beweglichen Scheibe, mit welcher der Riemen in Berührung steht, aus Harzwerkstoff hergestellt ist.

## Revendications

1. Transmission variable en continu du type à courroie (1), comprenant :
un disque fixe (8) formé d'un seul tenant avec un arbre tournant (6) ;
un disque mobile (10) monté sur l'arbre tournant (6) de manière à coulisser dans la direction axiale de l'arbre tournant (6) ; et
une courroie (4) interposée entre le disque mobile (10) et le disque fixe (8) pour transmettre une force motrice,
**caractérisée par** un coussinet (12), qui est interposé entre l'arbre tournant (6) et le disque mobile (10) pour permettre au disque mobile (10) de coulisser sur l'arbre tournant (6), et qui est réalisé de façon à avoir un coefficient de dilatation thermique plus petit au niveau de sa partie d'extrémité axiale au voisinage d'une face de contact (10a) du disque mobile (10) avec laquelle la courroie (4) vient en contact, par comparaison avec celui à l'autre partie d'extrémité axiale.

2. Transmission variable en continu du type à courroie selon la revendication 1, dans laquelle le coefficient de dilatation thermique du coussinet (12) varie graduellement.

3. Transmission variable en continu du type à courroie selon la revendication 1, dans laquelle le coussinet (12) inclut une pluralité de coussinets (12a ; 12b ; 12c) ayant individuellement un coefficient de dilatation thermique différent.

4. Transmission variable en continu du type à courroie selon la revendication 3,
dans laquelle le disque mobile (10) comprend un autre arbre tournant cylindrique (11) qui tourne coaxialement avec l'arbre tournant (6), et
dans laquelle les coussinets de la pluralité de coussinets (12a ; 12b ; 12c) sont agencés entre l'arbre tournant (6) et ledit autre arbre tournant (11) tout en gardant une distance entre l'un et l'autre.

5. Transmission variable en continu du type à courroie selon l'une quelconque des revendications 1 à 4, dans laquelle le coussinet (12) est fait d'une matière à base de résine.

6. Transmission variable en continu du type à courroie selon l'une quelconque des revendications 1 à 4, dans laquelle la face de contact (10a) du disque mobile avec laquelle la courroie est en contact est faite d'une matière à base de résine.
